# EUROPEAN PATENT APPLICATION

(11) **EP 4 425 621 A1**
(43) Date of publication of application: **04.09.2024**
(21) Application number: 21961943.4
(22) Date of filing: 29.10.2021
(51) Int. Cl.: H01M 10/04, H01M 50/531, H01M 50/533, H01M 50/538

(54) **ELECTROCHEMICAL APPARATUS AND ELECTRICAL DEVICE**

(71) Applicant: Ningde Amperex Technology Limited, Zhangwan Town, Jiaocheng District Ningde City Fujian 352100 (CN)
(72) Inventor: SU, Shiwei, Ningde City, Fujian Province 352100 (CN); DENG, Daolin, Ningde City, Fujian Province 352100 (CN); YANG, Xingfu, Ningde City, Fujian Province 352100 (CN); CHEN, Wen, Ningde City, Fujian Province 352100 (CN)
(74) Representative: Icosa
(86) International application number: PCT/CN2021/127692
(87) International publication number: WO 2023/070591

(57) **Abstract**

This application relates to the field of energy storage technologies and particularly discloses an electrochemical apparatus and an electric device. The electrochemical apparatus includes a housing, an electrode assembly accommodated in the housing, a first tab, and a second tab. The housing includes a top wall, a side wall, and a bottom wall, where the top wall is provided with a first electrode. The electrode assembly includes a first electrode plate and a second electrode plate. The first tab is connected to the first electrode plate and the first electrode. The second tab is connected to the second electrode plate. When viewed in a direction perpendicular to the top wall, an included angle between a length direction of the first tab and a length direction of the second tab is denoted as θ, satisfying: 0° ≤ θ ≤ 60°. When the electrochemical apparatus is in a charging/discharging state, a current direction on the first tab is different from a current direction on the second tab, and a magnetic field generated by the first tab and a magnetic field generated by the second tab can at least partially cancel each other out, weakening a magnetic field generated by the electrochemical apparatus.

## Description

### TECHNICAL FIELD

This application relates to the field of energy storage technologies, and in particular, to an electrochemical apparatus and an electric device.

### BACKGROUND

Button cells are widely used in Bluetooth headsets, but the noise floor generated by a magnetic field of a button cell itself can affect the sound effect of a Bluetooth headset and the user experience.

### SUMMARY

In view of the above situation, it is necessary to provide an electrochemical apparatus, so as to reduce electromagnetic interference to electric devices.

According to a first aspect of this application, an electrochemical apparatus is provided. The electrochemical apparatus includes a housing, an electrode assembly accommodated in the housing, a first tab, and a second tab. The housing includes a top wall, a side wall, and a bottom wall, where the top wall is provided with a first electrode. The electrode assembly includes a first electrode plate and a second electrode plate. The first tab is connected to the first electrode plate and the first electrode. The second tab is connected to the second electrode plate. When viewed in a direction perpendicular to the top wall, an included angle between a length direction of the first tab and a length direction of the second tab is denoted as θ, satisfying: 0° ≤ θ ≤ 60°. When the electrochemical apparatus is in a charging/discharging state, a current direction on the first tab and a current direction on the second tab tend to be opposite, and a magnetic field generated by the first tab and a magnetic field generated by the second tab overlap and can at least partially cancel each other out, so that a magnetic field generated by the electrochemical apparatus is weakened, thereby reducing the electromagnetic interference to an electric device.

Further, in some embodiments of this application, 0° ≤ θ ≤ 30°. In this case, the magnetic field generated by the first tab and the magnetic field generated by the second tab cancel each other out better, and the difference in magnetic field strength at various positions of the end face is small.

In some embodiments of this application, the first tab includes a first connecting zone connected to the first electrode plate and a third connecting zone connected to the first electrode. The second tab includes a second connecting zone connected to the second electrode plate and a fourth connecting zone connected to the housing. When viewed in the direction perpendicular to the top wall, a distance between a geometric center of the first connecting zone and a geometric center of the third connecting zone is denoted as L1, and a distance between a geometric center of the second connecting zone and a geometric center of the fourth connecting zone is denoted as L2, satisfying: 0.18 ≤ L1/L2 ≤ 2.75. As compared with other values of L1/L2, when 0.18 ≤ L1/L2 ≤ 2.75, the magnetic field generated by the first tab and the magnetic field generated by the second tab cancel each other out well, and this is conducive to weakening the magnetic field generated by the electrochemical apparatus.

Further, in some embodiments of this application, 0.45 ≤ L1/L2 ≤ 2.2. In this case, the magnetic field generated by the first tab and the magnetic field generated by the second tab cancel each other out better, and the difference in magnetic field strength at various positions of the end face is small.

In some embodiments of this application, the electrochemical apparatus further includes a first connecting member and a second connecting member disposed outside the housing. The first connecting member includes a fifth connecting zone connected to the first electrode, and a sixth connecting zone is provided at an end portion of the first connecting member away from the first electrode. The second connecting member includes a seventh connecting zone connected to the housing, and an eighth connecting zone is provided at an end portion of the second connecting member away from the seventh connecting zone. When viewed in the direction perpendicular to the top wall, a connecting line between a geometric center of the fifth connecting zone and a geometric center of the sixth connecting zone is denoted as W1, a connecting line between a geometric center of the seventh connecting zone and a geometric center of the eighth connecting zone is denoted as W2, and an included angle between W1 and W2 is denoted as β, satisfying: 0° ≤ β ≤ 30°. As compared with β > 30°, when 0° ≤ β ≤ 30°, a magnetic field generated by the first connecting member and a magnetic field generated by the second connecting member cancel each other out well.

In some embodiments of this application, when viewed in the direction perpendicular to the top wall, a distance between the geometric center of the fifth connecting zone and the geometric center of the sixth connecting zone is denoted as L3, and a distance between the geometric center of the seventh connecting zone and the geometric center of the eighth connecting zone is denoted as L4, satisfying: 0.45 ≤ L3/L4 ≤ 2.2. As compared with other values of L3/L4, when 0.45 ≤ L3/L4 ≤ 2.2, the magnetic field generated by the first connecting member and the magnetic field generated by the second connecting member cancel each other out well, and this is conducive to reducing the difference in magnetic field strength at various positions of the end face of the electrochemical apparatus.

In some embodiments of this application, the electrode assembly is a wound structure. The first electrode plate includes a first active material layer, the first active material layer includes a first end portion, and the first end portion is disposed at a winding start end of the wound structure. The second electrode plate includes a second active material layer, the second active material layer includes a second end portion, and the second end portion is disposed at the winding start end of the wound structure. The first tab includes a first connecting zone connected to the first electrode plate. The second tab includes a second connecting zone connected to the second electrode plate. Along a length direction of the first electrode plate, a distance between a geometric center of the first connecting zone and the first end portion is denoted as D1; and along a length direction of the second electrode plate, a distance between a geometric center of the second connecting zone and the second end portion is denoted as D2, satisfying: 0.5 ≤ D1/D2 ≤ 2. As compared with other values of D1/D2, when 0.5 ≤ D1/D2 ≤ 2, the magnetic field generated by the first electrode plate and the magnetic field generated by the second electrode plate cancel each other out well, and this is conducive to weakening the magnetic field generated by the electrochemical apparatus.

Further, in some embodiments of this application, 0.9 ≤ D1/D2 ≤ 1.1. In this case, the magnetic field generated by the first electrode plate and the magnetic field generated by the second electrode plate cancel each other out better, and the difference in magnetic field strength at various positions of the end face is small.

In some embodiments of this application, at least one of the following conditions is satisfied: (a) the first tab and the second tab are located on opposite sides of the electrode assembly; (b) the top wall has a first surface and a second surface opposite each other, the top wall is provided with a through hole penetrating the first surface and the second surface, and at least part of the first electrode is disposed in the through hole; (c) an insulator is provided between the top wall and the first electrode; or (d) the housing includes a metal material.

According to a second aspect of this application, an electric device is further provided, where the electric device includes a device body and an electrochemical apparatus, the electrochemical apparatus being the electrochemical apparatus according to any one of the foregoing embodiments. The electrochemical apparatus can weaken the magnetic field generated by itself, reduce the impact of its own magnetic field on the electric device, and improve the performance of the electric device.

### BRIEF DESCRIPTION OF DRAWINGS

FIG. 1 is a first view of an electrochemical apparatus according to an embodiment of this application.
FIG. 2 is a second view of an electrochemical apparatus according to an embodiment of this application.
FIG. 3 is a partial cross-sectional view of the electrochemical apparatus in FIG. 1.
FIG. 4 is a first view of an electrochemical apparatus according to another embodiment of this application.
FIG. 5 is a second view of an electrochemical apparatus according to another embodiment of this application.
FIG. 6 is a partial cross-sectional view of the electrochemical apparatus in FIG. 4.
FIG. 7 is a schematic structural diagram of a first electrode according to another embodiment of this application.
FIG. 8 is a first view of an electrode assembly, a first tab, and a second tab according to another embodiment of this application.
FIG. 9 is a second view of an electrode assembly, a first tab, and a second tab according to another embodiment of this application.
FIG. 10 is a third view of an electrode assembly, a first tab, and a second tab according to another embodiment of this application.
FIG. 11 is a fourth view of an electrode assembly, a first tab, and a second tab according to another embodiment of this application.
FIG. 12 is a fifth view of an electrode assembly, a first tab, and a second tab according to another embodiment of this application.
FIG. 13 is a sixth view of an electrode assembly, a first tab, and a second tab according to another embodiment of this application.
FIG. 14 is a third view of an electrochemical apparatus according to another embodiment of this application.
FIG. 15 is a plot of magnetic flux density versus θ in Test 1 in this application.
FIG. 16 is a schematic structural diagram of an electric device according to an embodiment of this application.

### Reference signs of main components

| | |
|---|---|
| Electrochemical apparatus | 100 |
| Housing | 1 |
| Top wall | 11 |
| First electrode | 111 |
| First portion | 1111 |
| Third surface | 1111a |
| Second portion | 1112 |
| First surface | 112 |
| Second surface | 113 |
| Through hole | 114 |
| Side wall | 12 |
| Bottom wall | 13 |
| Conductive portion | 131 |
| Cavity space | 14 |
| Electrode assembly | 2 |
| First electrode plate | 21 |
| First active material layer | 211 |
| First end portion | 2111 |
| Second electrode plate | 22 |
| Second active material layer | 221 |
| Second end portion | 2211 |
| Separator | 23 |
| First tab | 3 |
| First connecting zone | 31 |
| Third connecting zone | 32 |
| Second tab | 4 |
| Second connecting zone | 41 |
| Fourth connecting zone | 42 |
| First connecting member | 5 |
| Fifth connecting zone | 51 |
| Sixth connecting zone | 52 |
| Second connecting member | 6 |
| Seventh connecting zone | 61 |
| Eighth connecting zone | 62 |
| Insulator | 7 |
| Electric device | 200 |
| Device body | 210 |
| Distance between geometric center of first connecting zone and geometric center of third connecting zone | L1 |
| Distance between geometric center of second connecting zone and geometric center of fourth connecting zone | L2 |
| Distance between geometric center of fifth connecting zone and geometric center of sixth connecting zone | L3 |
| Distance between geometric center of seventh connecting zone and geometric center of eighth connecting zone | L4 |
| First direction | X |
| Second direction | Y |
| Third direction | Z |

This application will be further described with reference to the accompanying drawings in the following specific embodiments.

### DESCRIPTION OF EMBODIMENTS

The following describes the technical solutions in some embodiments of this application with reference to the accompanying drawings in these embodiments of this application. Apparently, the described embodiments are only some rather than all of the embodiments of this application.

It should be noted that when one component is assumed as being "connected to" another component, it may be connected to the another component directly or with a component possibly present therebetween. When a component is deemed as being "disposed" on another component, it may be directly disposed on the another component, or there may be a component disposed in between.

Unless otherwise defined, all technical and scientific terms used herein shall have the same meanings as commonly understood by persons skilled in the art to which this application pertains. The terms used herein in the specification of this application are for description of specific embodiments only without any intention to limit this application.

An embodiment of this application provides an electrochemical apparatus including a housing, an electrode assembly accommodated in the housing, a first tab, and a second tab. The housing includes a top wall, a side wall, and a bottom wall, the top wall being provided with a first electrode. The electrode assembly includes a first electrode plate and a second electrode plate. The first tab is connected to the first electrode plate and the first electrode. The second tab is connected to the second electrode plate. When viewed in a direction perpendicular to the top wall, an included angle between a length direction of the first tab and a length direction of the second tab is denoted as θ, satisfying: 0° ≤ θ ≤ 60°. When the electrochemical apparatus is in a charging/discharging state, a current direction on the first tab and a current direction on the second tab tend to be opposite, and a magnetic field generated by the first tab and a magnetic field generated by the second tab overlap and can at least partially cancel each other out, so that a magnetic field generated by the electrochemical apparatus is weakened.

In an example, further description will be made with an example in which the electrochemical apparatus is placed on the horizontal plane, with the bottom wall at the bottom and the top wall at the top.

The following further describes some embodiments of this application with reference to the accompanying drawings.

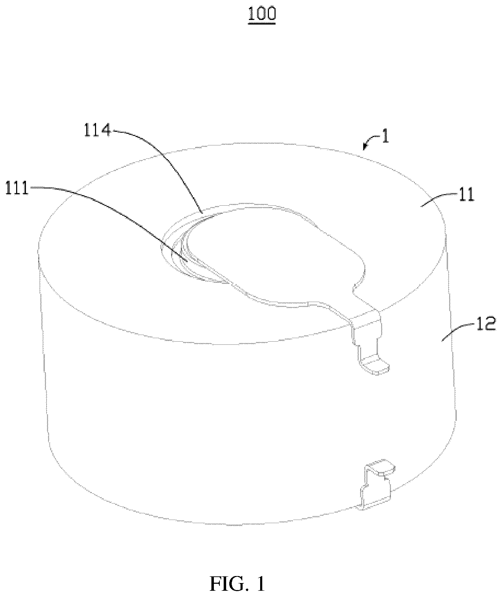

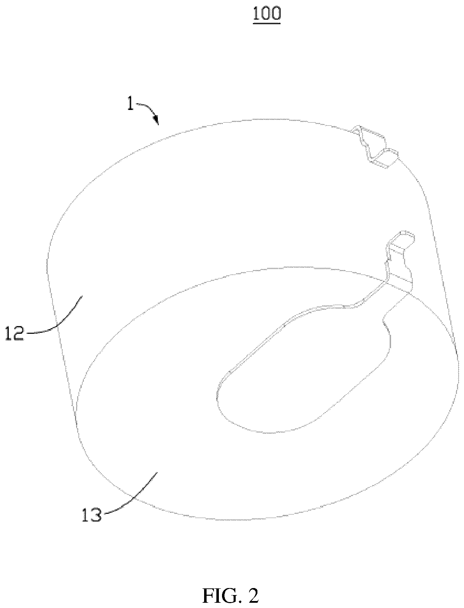

As shown in FIG. 1, FIG. 2, and FIG. 3, an embodiment of this application provides an electrochemical apparatus 100. The electrochemical apparatus 100 includes a housing 1, an electrode assembly 2, a first tab 3, and a second tab 4. The electrode assembly 2, the first tab 3, and the second tab 4 are disposed inside the housing 1, and the electrode assembly 2 connects the first tab 3 and the second tab 4.

The housing 1 includes a top wall 11, a side wall 12, and a bottom wall 13. The top wall 11, the side wall 12, and the bottom wall 13 enclose a cavity space 14, and the electrode assembly 2, the first tab 3, and the second tab 4 are disposed in the cavity space 14.

The top wall 11 is provided with a first electrode 111. The first electrode 111 is connected to the first tab 3.

In an embodiment, the top wall 11 is provided with a through hole 114 and includes a first surface 112 and a second surface 113 facing away from each other. The through hole 114 penetrates the first surface 112 and the second surface 113. The first surface 112 is located on a side of the top wall 11 facing the cavity space 14, and the second surface 113 is located on a side of the top wall 11 facing away from the cavity space 14.

At least part of the first electrode 111 is disposed in the through hole 114. In an embodiment, the electrochemical apparatus 100 further includes an insulator 7. The insulator 7 is disposed between the top wall 11 and the first electrode 111. The insulator 7 connects the top wall 11 and the first electrode 111 to insulate the top wall 11 from the first electrode 111, reducing a risk of short circuit in the electrochemical apparatus 100.

In an embodiment, a material of the first electrode 111 includes but is not limited to aluminum or copper metal.

In an embodiment, the bottom wall 13 includes a conductive portion 131. The conductive portion 131 is connected to the second tab 4. In an embodiment, the conductive portion 131 includes a metal material.

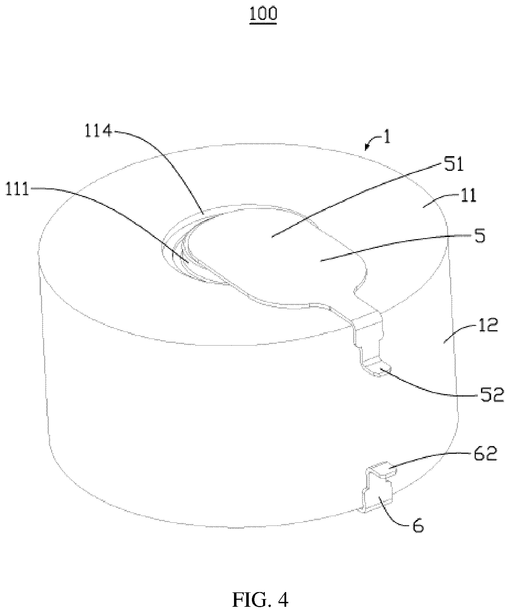

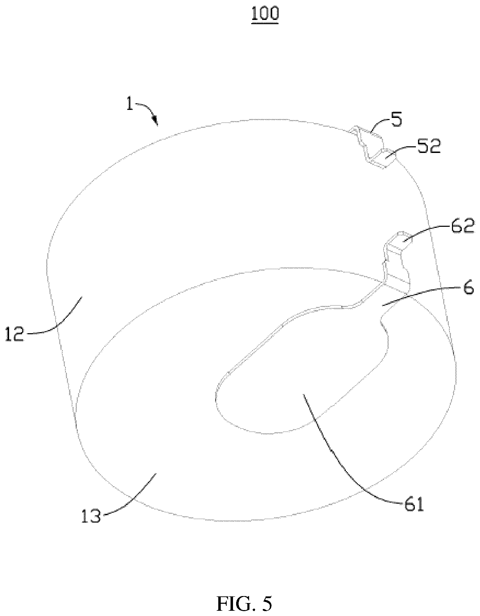

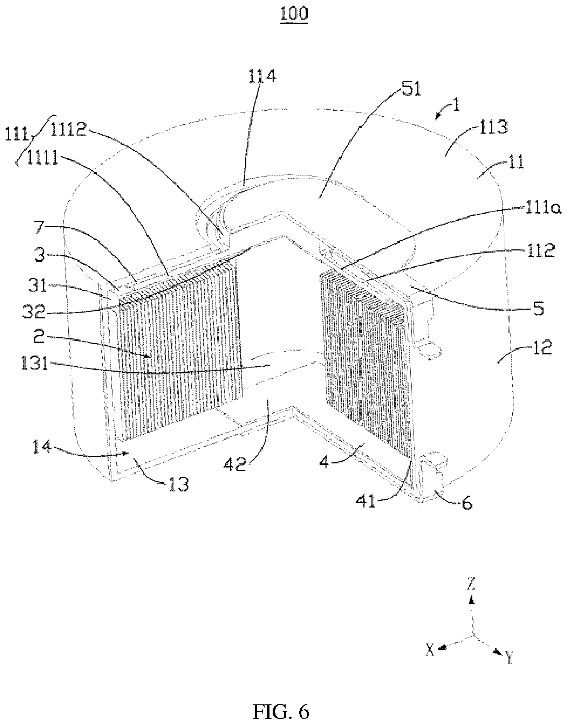

As shown in FIG. 4, FIG. 5, and FIG. 6, in an embodiment, the electrochemical apparatus 100 may further include a first connecting member 5 and a second connecting member 6 disposed outside the housing 1, where the first connecting member 5 is connected to the first electrode 111 so that the first connecting member 5 is electrically connected to the first tab 3; and the second connecting member 6 is connected to the conductive portion 131 so that the second connecting member 6 is electrically connected to the second tab 4. The first connecting member 5 and the second connecting member 6 can be used to connect an external electric device, so that the electrochemical apparatus 100 can supply power to the electric device.

In an embodiment, the first connecting member 5 includes a metal material. In an embodiment, the second connecting member 6 includes a metal material.

In other embodiments, the first electrode 111 is disposed in the through hole 114 (not shown in the figure), and the insulator 7 is disposed between the first electrode 111 and the inner wall of the through hole 114.

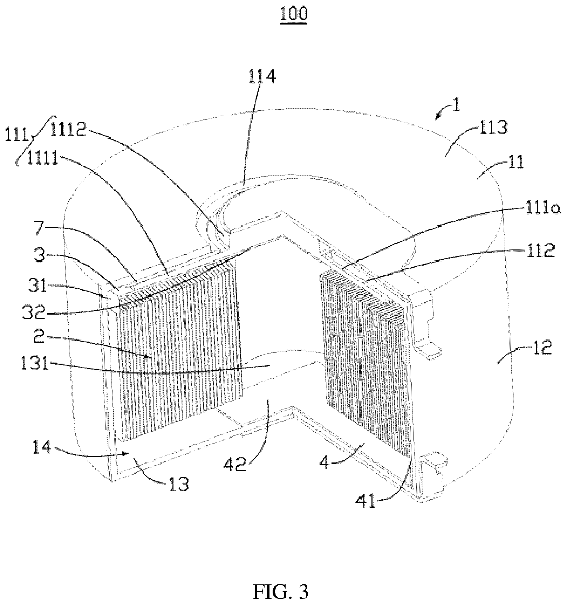

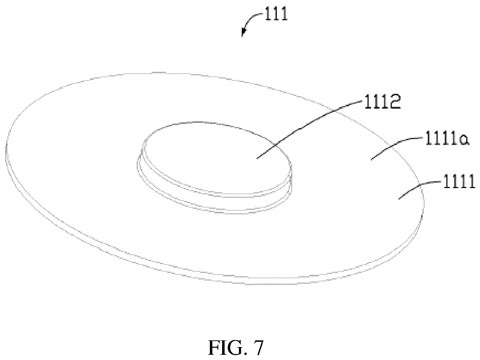

As shown in FIG. 3 and FIG. 7, the first electrode 111 includes a first portion 1111 and a second portion 1112. The first portion 1111 has a third surface 1111a, and the second portion 1112 protrudes from the third surface 1111a. The first portion 1111 is disposed in the cavity space 14, and the second portion 1112 is located in the through hole 114.

For ease of understanding and description, further description will be made below with an example in which a direction perpendicular to the top wall 11 is a third direction Z; and when viewed in the third direction Z, a length direction of the first tab 3 is a first direction X, and a length direction of the second tab 4 is a second direction Y.

In an embodiment, the insulator 7 has a ring structure, and the second portion 1112 of the first electrode 111 passes through the ring structure.

In an embodiment, the insulator 7 includes but is not limited to sealant.

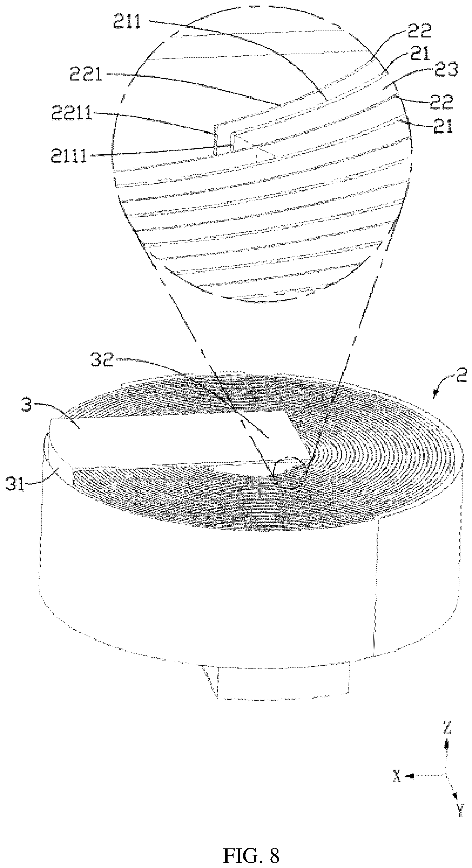

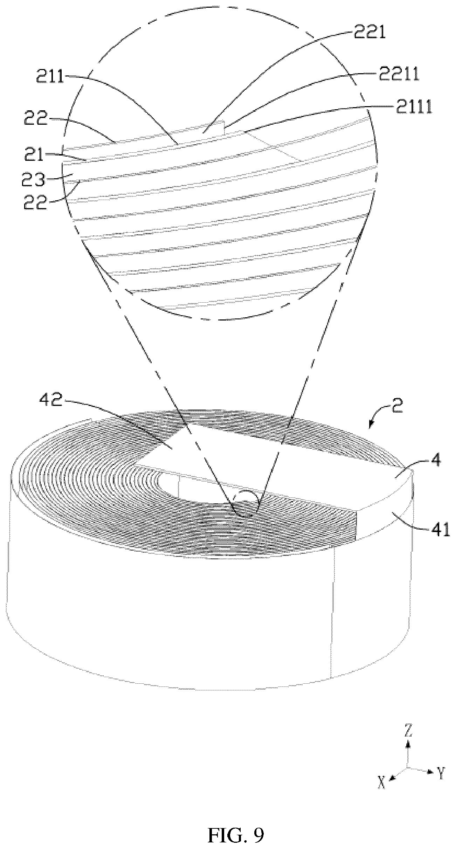

As shown in FIG. 8 and FIG. 9, the electrode assembly 2 includes a first electrode plate 21, a second electrode plate 22, and a separator 23, and the separator 23 is disposed between the first electrode plate 21 and the second electrode plate 22. In an embodiment, the first electrode plate 21, the separator 23, and the second electrode plate 22 are wound together.

One of the first electrode plate 21 and the second electrode plate 22 is a positive electrode plate and the other is a negative electrode plate.

One of the first tab 3 and the second tab 4 is a positive electrode tab and the other is a negative electrode tab.

The first electrode plate 21 includes a first active material layer 211, the first tab 3 has a first connecting zone 31, and the first tab 3 is connected to the first electrode plate 21 at the first connecting zone 31.

The second electrode plate 22 includes a second active material layer 221, the second tab 4 has a second connecting zone 41, and the second tab 4 is connected to the second electrode plate 22 at the second connecting zone 41.

In an embodiment, the first tab 3 is located on a side of the electrode assembly 2, and the second tab 4 is located on the opposite side of the electrode assembly 2. In other embodiments, the first tab 3 and the second tab 4 may alternatively be located on a same side of the electrode assembly 2 (not shown in the figure).

With reference to FIG. 3, FIG. 8, and FIG. 9, the first tab 3 has a third connecting zone 32, and the first tab 3 is connected to the first electrode 111 at the third connecting zone 32. The second tab 4 has a fourth connecting zone 42, and the second tab 4 is connected to the bottom wall 13 at the fourth connecting zone 42.

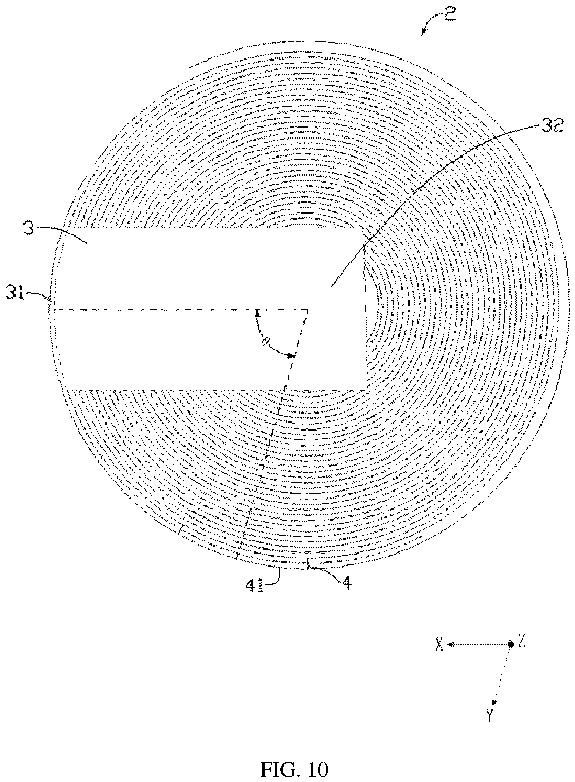

With reference to FIG. 8, FIG. 9, and FIG. 10, in an embodiment, when viewed in the third direction Z, an included angle between the first direction X and the second direction Y is denoted as θ, and 0° ≤ θ ≤ 60°.

In this application, the first direction X (that is, a length direction of the first tab 3) is a direction of a connecting line between a geometric center of the third connecting zone 32 and a geometric center of the first connecting zone 31, when viewed in the third direction Z. The second direction Y (that is, a length direction of the second tab 4) is a direction of a connecting line between a geometric center of the fourth connecting zone 42 and a geometric center of the second connecting zone 41, when viewed in the third direction Z. θ is an included angle between a ray from an intersection point between the first direction X and the second direction Y to the geometric center of the first connecting zone 31 and a ray from the intersection point to the geometric center of the second connecting zone 41, when viewed in the third direction Z.

When the electrochemical apparatus 100 is in a charging/discharging state, the magnetic field generated by the first tab 3 and the magnetic field generated by the second tab 4 can at least partially cancel each other out, so that the magnetic field generated by the electrochemical apparatus 100 is weakened, thereby reducing the impact of the magnetic field generated by the electrochemical apparatus 100 on the electric device.

As compared with θ > 60°, when 0° ≤ θ ≤ 60°, the magnetic field generated by the first tab 3 and the magnetic field generated by the second tab 4 cancel each other out well, and the impact of the magnetic field generated by the electrochemical apparatus 100 on the electric device is small.

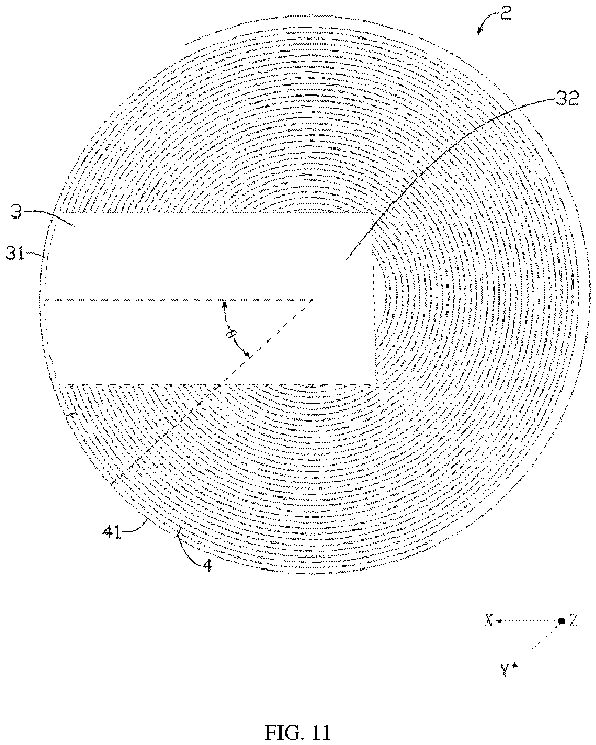

As shown in FIG. 11, further optionally, 0° ≤ θ ≤ 30°. As compared with 30° < θ ≤ 60°, when 0° ≤ θ ≤ 30°, the magnetic field generated by the first tab 3 and the magnetic field generated by the second tab 4 cancel each other out better, and the difference in magnetic field strength at various positions of the end face of the electrochemical apparatus 100 is small.

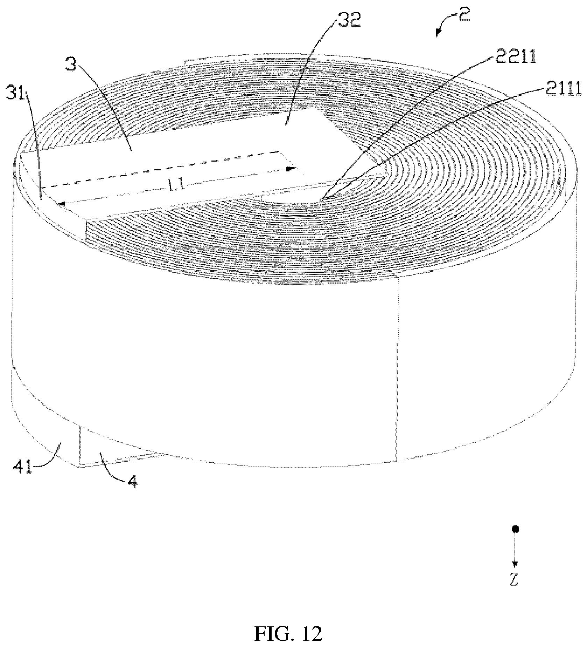

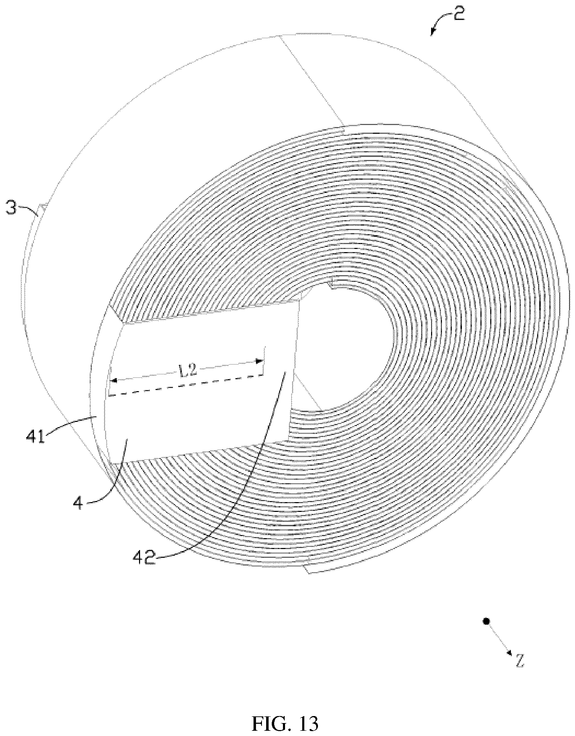

As shown in FIG. 12 and FIG. 13, when viewed in the third direction Z, a distance between the geometric center of the first connecting zone 31 and the geometric center of the third connecting zone 32 is denoted as L1, and a distance between the geometric center of the second connecting zone 41 and the geometric center of the fourth connecting zone 42 is denoted as L2.

Optionally, 0.18 ≤ L1/L2 ≤ 2.75. As compared with other values of L1/L2, when 0.18 ≤ L1/L2 ≤ 2.75, the magnetic field generated by the first tab 3 and the magnetic field generated by the second tab 4 cancel each other out well, and the impact of the magnetic field generated by the electrochemical apparatus 100 on the electric device is small.

Further optionally, 0.45 ≤ L1/L2 ≤ 2.2. In this case, the magnetic field generated by the first tab 3 and the magnetic field generated by the second tab 4 cancel each other out better, and the difference in magnetic field strength at various positions of the end face of the electrochemical apparatus 100 is small.

With reference to FIG. 8, FIG. 9, FIG. 12, and FIG. 13, the electrode assembly 2 is a wound structure. In an embodiment, the first active material layer 211 includes a first end portion 2111, and the first end portion 2111 is disposed at a winding start end of the wound structure; and the second active material layer 221 includes a second end portion 2211, and the second end portion 2211 is disposed at the winding start end of the wound structure.

Along a length direction of the first electrode plate 21, a distance between a geometric center of the first connecting zone 31 and the first end portion 2111 is denoted as D1. Along a length direction of the second electrode plate 22, a distance between a geometric center of the second connecting zone 41 and the second end portion 2211 is denoted as D2.

Optionally, 0.5 ≤ D 1/D2 ≤ 2. As compared with other values of D1/D2, when 0.5 ≤ D1/D2 ≤ 2, a magnetic field generated by the first electrode plate 21 and a magnetic field generated by the second electrode plate 22 cancel each other out well, and the impact of the magnetic field generated by the electrochemical apparatus 100 on the electric device is small.

Further optionally, 0.9 ≤ D1/D2 ≤ 1.1. In this case, the magnetic field generated by the first electrode plate 21 and the magnetic field generated by the second electrode plate 22 cancel each other out better, and the difference in magnetic field strength at various positions of the end face of the electrochemical apparatus 100 is small.

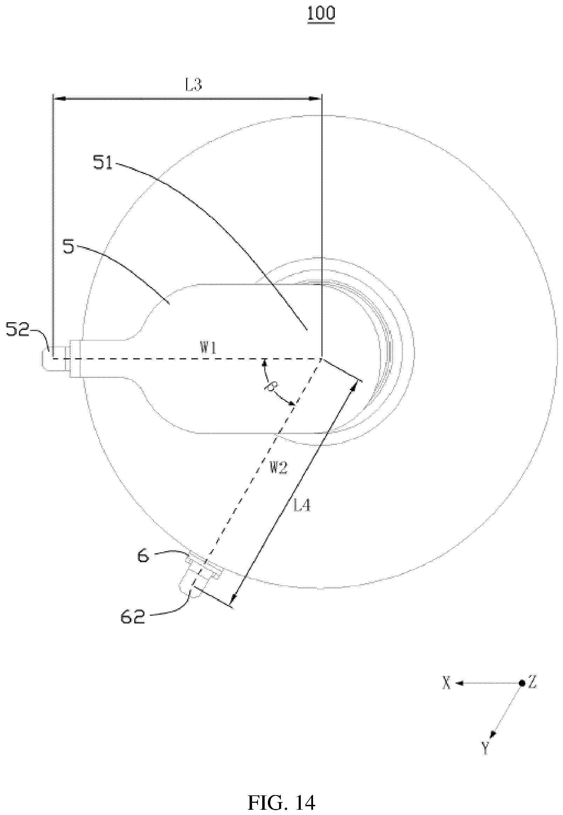

Referring to FIG. 4, FIG. 5, and FIG. 14, the first connecting member 5 includes a fifth connecting zone 51 and a sixth connecting zone 52. The fifth connecting zone 51 is connected to the first electrode 111, and the sixth connecting zone 52 is located at an end portion of the first connecting member 5 away from the first electrode 111. The second connecting member 6 includes a seventh connecting zone 61 and an eighth connecting zone 62. The seventh connecting zone 61 is connected to the bottom wall 13, and the eighth connecting zone 62 is located at an end portion of the second connecting member 6 away from the seventh connecting zone 61.

When viewed in the third direction Z, a connecting line between a geometric center of the fifth connecting zone 51 and a geometric center of the sixth connecting zone 52 is denoted as W1, a connecting line between a geometric center of the seventh connecting zone 61 and a geometric center of the eighth connecting zone 62 is denoted as W2, and an included angle between W1 and W2 is denoted as β. In this application, β is an included angle between a ray from an intersection point between W1 and W2 to the geometric center of the sixth connecting zone 52 and a ray from the intersection point to the geometric center of the eighth connecting zone 62, when viewed in the third direction Z.

Optionally, 0° ≤ β ≤ 30°. As compared with β > 30°, when 0° ≤ β ≤ 30°, a magnetic field generated by the first connecting member 5 and a magnetic field generated by the second connecting member 6 cancel each other out well, and the impact of the magnetic field generated by the electrochemical apparatus 100 on the electric device is small.

When viewed in the third direction Z, a distance between the geometric center of the fifth connecting zone 51 and the geometric center of the sixth connecting zone 52 is denoted as L3, and a distance between the geometric center of the seventh connecting zone 61 and the geometric center of the eighth connecting zone 62 is denoted as L4.

Optionally, 0.45 ≤ L3/L4 ≤ 2.2. As compared with other values of L3/L4, the magnetic field generated by the first connecting member 5 and the magnetic field generated by the second connecting member 6 cancel each other out well, and the impact of the magnetic field generated by the electrochemical apparatus 100 on the electric device is small.

Further optionally, 0.9 ≤ L3/L4 ≤ 1.1. In this case, the magnetic field generated by the first connecting member 5 and the magnetic field generated by the second connecting member 6 cancel each other out better, and the difference in magnetic field strength at various positions of the end face of the electrochemical apparatus 100 is small.

To verify the weakening effect of this application on the magnetic field generated by the electrochemical apparatus 100, the following comparative tests were conducted.

### Test 1

With the first tab set as a positive electrode tab, the second tab set as a negative electrode tab, the value of L1/L2 set to 0.9335, and the value of the included angle θ changed, the magnetic flux density B1 on the side of the top wall 11 and the magnetic flux density B2 on the side of the bottom wall 13 were recorded.

In this application, the magnetic flux density, also known as the magnetic induction intensity, can be used to indicate the strength of a magnetic field. A larger value of the magnetic flux density indicates a stronger magnetic field and a smaller weakening effect on the magnetic field generated by the electrochemical apparatus 100, while a smaller value of the magnetic flux density indicates a weaker magnetic field and a greater weakening effect on the magnetic field generated by the electrochemical apparatus 100.

**Table 1 Comparison of records for different included angles θ**

| Angle θ (°) | D1/D2 | Magnetic flux density B1/10⁻⁶ (T) | Magnetic flux density B2/10⁻⁶ (T) |
|---|---|---|---|
| 0 | 0.9418 | 4.56 | 3.39 |
| 30 | 0.9345 | 5.10 | 4.12 |
| 60 | 0.9273 | 6.21 | 4.85 |
| 90 | 0.9202 | 8.21 | 6.54 |
| 120 | 0.9132 | 10.30 | 8.93 |
| 150 | 0.9063 | 10.20 | 8.65 |
| 180 | 0.8995 | 9.83 | 8.23 |

The data from the above table was plotted on a graph as shown in FIG. 12.

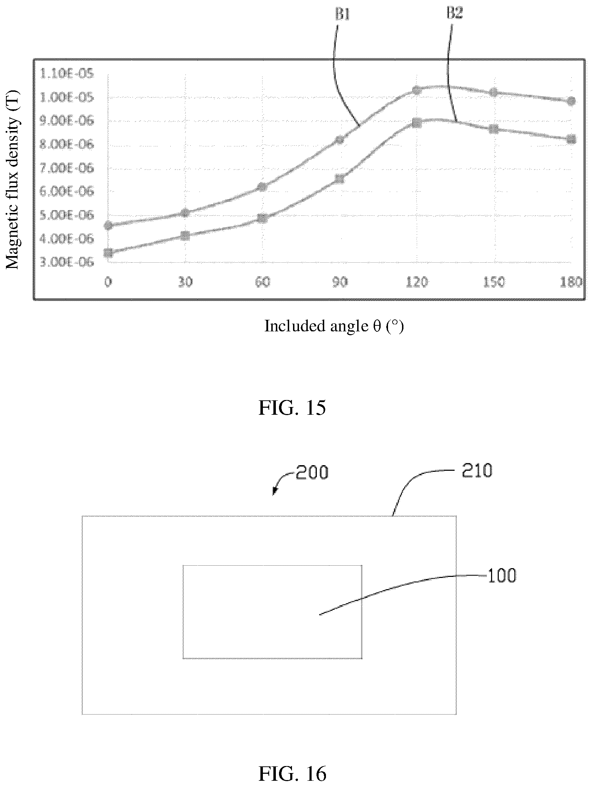

It can be learned from FIG. 15 and Table 1 that when θ is 0°, the magnetic flux density B1 is 4.56×10⁻⁶ T and the magnetic flux density B2 is 3.39×10⁻⁶ T; when θ is 30°, the magnetic flux density B1 is 5.1×10⁻⁶ T (about 1.12 times that when θ is 0°) and the magnetic flux density B2 is 4.12×10⁻⁶ T (about 1.22 times that when θ is 0°); and when θ is 60°, the magnetic flux density B1 is 6.21×10⁻⁶ T (about 1.36 times that when θ is 0°) and the magnetic flux density B2 is 4.85×10⁻⁶ T (about 1.43 times that when θ is 0°).

When 0° ≤ θ ≤ 30°, a current direction on the first tab 3 and a current direction on the second tab 4 tend to be opposite, the magnetic field generated by the first tab 3 and the magnetic field generated by the second tab 4 cancel each other out well, and the electrochemical apparatus 100 has good electromagnetic characteristics. Furthermore, it can be seen from FIG. 15 that when the included angle θ changes in the range of 0° to 30°, the slopes of the magnetic flux densities B1 and B2 are both small, that is, the difference in the effect of magnetic field cancellation between the first tab 3 and the second tab 4 is small within this range.

### Test 2

With the first tab set as a positive electrode tab, the second tab set as a negative electrode tab, the included angle θ set to 0°, the value of D1/D2 set to 0.9418, and the value of L1/L2 changed, the magnetic flux density B1 on the side of the top wall 11 and the magnetic flux density B2 on the side of the bottom wall 13 were recorded.

**Table 2 Comparison of records of different L1/L2 ratios**

| Angle θ (°) | L1/L2 | D1/D2 | Magnetic flux density B1/10⁻⁶ (T) | Magnetic flux density B2/10⁻⁶ (T) |
|---|---|---|---|---|
| 0 | 0.18 | 0.9418 | 9.2734 | 6.7656 |
| 0 | 0.27 | 0.9418 | 8.8178 | 6.4300 |
| 0 | 0.36 | 0.9418 | 8.3299 | 6.0896 |
| 0 | 0.45 | 0.9418 | 7.7558 | 5.6966 |
| 0 | 0.51 | 0.9418 | 7.3461 | 5.4147 |
| 0 | 0.59 | 0.9418 | 6.6192 | 4.9062 |
| 0 | 0.68 | 0.9418 | 5.9259 | 4.4009 |
| 0 | 0.76 | 0.9418 | 5.4078 | 3.9927 |
| 0 | 0.85 | 0.9418 | 5.0146 | 3.6726 |
| 0 | 0.93 | 0.9418 | 4.6924 | 3.3387 |
| 0 | 1 | 0.9418 | 4.5598 | 3.4319 |
| 0 | 1.1 | 0.9418 | 4.6651 | 4.2037 |
| 0 | 1.22 | 0.9418 | 4.9275 | 5.1018 |
| 0 | 1.37 | 0.9418 | 5.2254 | 5.7020 |
| 0 | 1.57 | 0.9418 | 5.5952 | 6.3184 |
| 0 | 1.83 | 0.9418 | 5.9003 | 7.0253 |
| 0 | 2.20 | 0.9418 | 6.6071 | 7.7952 |
| 0 | 2.75 | 0.9418 | 7.3482 | 8.4934 |

It can be learned from Table 2 that when L1/L2 is 1, the magnetic flux density B1 is about 4.56×10⁻⁶ T and the magnetic flux density B2 is about 3.43×10⁻⁶ T.

When L1/L2 is 0.45, the magnetic flux density B1 is about 7.76×10⁻⁶ T (about 1.70 times that when L1/L2 is 1) and the magnetic flux density B2 is about 5.70×10⁻⁶ T (about 1.66 times that when L1/L2 is 1).

When L1/L2 is 1.57, the magnetic flux density B1 is about 5.60×10⁻⁶ T (about 1.23 times that when L1/L2 is 1) and the magnetic flux density B2 is about 6.32×10⁻⁶ T (about 1.84 times that when L1/L2 is 1).

When L1/L2 is 1.83, the magnetic flux density B1 is about 5.90×10⁻⁶ T (about 1.29 times that when L1/L2 is 1) and the magnetic flux density B2 is about 7.03×10⁻⁶ T (about 2.05 times that when L1/L2 is 1);

When L1/L2 is 2.20, the magnetic flux density B1 is about 6.61×10⁻⁶ T (about 1.45 times that when L1/L2 is 1) and the magnetic flux density B2 is about 7.80×10⁻⁶ T (about 2.27 times that when L1/L2 is 1).

Therefore, when 0.45 ≤ L1/L2 ≤ 2.2, the magnetic field generated by the first tab 3 and the magnetic field generated by the second tab 4 cancel each other out well, the magnetic flux densities on the side of the top wall 11 and the side of the bottom wall 13 are both less than 8×10⁻⁶ T, and the electrochemical apparatus 100 has good electromagnetic characteristics. In addition, the magnetic field generated by the first tab 3 and the magnetic field generated by the second tab 4 cancel each other out more evenly, thereby reducing the difference in magnetic field strength at various positions of the end face of the electrochemical apparatus. Further, when 0.45 ≤ L1/L2 ≤ 1.57, compared with the magnetic flux density when L1/L2 is 1, the magnetic flux densities on the side of the top wall 11 and the side of the bottom wall 13 change slightly, and this can ensure that the entire electrochemical apparatus has good electromagnetic characteristics.

As shown in FIG. 16, an embodiment of this application further provides an electric device 200. The electric device 200 includes a device body 210 and the electrochemical apparatus 100 according to any one of the foregoing embodiments, and the electrochemical apparatus 100 is disposed on the device body 210. The electrochemical apparatus 100 can weaken the magnetic field generated by itself, has good electromagnetic characteristics, and weakens the impact of its own magnetic field on the electric device 200.

In addition, persons skilled in the art can also make other changes within the spirit of this application. Certainly, these changes made according to the spirit of this application shall fall within the scope of this application.

## Claims

1. An electrochemical apparatus, comprising:
a housing, wherein the housing comprises a top wall, a side wall, and a bottom wall, the top wall being provided with a first electrode;
an electrode assembly accommodated in the housing, wherein the electrode assembly comprises a first electrode plate and a second electrode plate;
a first tab connected to the first electrode plate and the first electrode; and
a second tab connected to the second electrode plate;
wherein when viewed in a direction perpendicular to the top wall, an included angle between a length direction of the first tab and a length direction of the second tab is denoted as θ, satisfying: 0° ≤ θ ≤ 60°.

2. The electrochemical apparatus according to claim 1, wherein 0° ≤ θ ≤ 30°.

3. The electrochemical apparatus according to claim 1, wherein
the first tab comprises a first connecting zone connected to the first electrode plate and a third connecting zone connected to the first electrode;
the second tab comprises a second connecting zone connected to the second electrode plate and a fourth connecting zone connected to the housing; and
when viewed in the direction perpendicular to the top wall, a distance between a geometric center of the first connecting zone and a geometric center of the third connecting zone is denoted as L1, and a distance between a geometric center of the second connecting zone and a geometric center of the fourth connecting zone is denoted as L2, satisfying: 0.18 ≤ L1/L2 ≤ 2.75.

4. The electrochemical apparatus according to claim 3, wherein 0.45 ≤ L1/L2 ≤ 2.2.

5. The electrochemical apparatus according to claim 1, further comprising:
a first connecting member and a second connecting member disposed outside the housing; wherein
the first connecting member comprises a fifth connecting zone connected to the first electrode, and a sixth connecting zone is provided at an end portion of the first connecting member away from the first electrode;
the second connecting member comprises a seventh connecting zone connected to the housing, and an eighth connecting zone is provided at an end portion of the second connecting member away from the seventh connecting zone; and
when viewed in the direction perpendicular to the top wall, a connecting line between a geometric center of the fifth connecting zone and a geometric center of the sixth connecting zone is denoted as W1, a connecting line between a geometric center of the seventh connecting zone and a geometric center of the eighth connecting zone is denoted as W2, and an included angle between W1 and W2 is denoted as β, satisfying: 0° ≤ β ≤ 30°.

6. The electrochemical apparatus according to claim 5, wherein when viewed in the direction perpendicular to the top wall, a distance between the geometric center of the fifth connecting zone and the geometric center of the sixth connecting zone is denoted as L3, and a distance between the geometric center of the seventh connecting zone and the geometric center of the eighth connecting zone is denoted as L4, satisfying: 0.45 ≤ L3/L4 ≤ 2.2.

7. The electrochemical apparatus according to claim 1, wherein
the electrode assembly is a wound structure;
the first electrode plate comprises a first active material layer, the first active material layer comprises a first end portion, and the first end portion is disposed at a winding start end of the wound structure;
the second electrode plate comprises a second active material layer, the second active material layer comprises a second end portion, and the second end portion is disposed at the winding start end of the wound structure;
the first tab comprises a first connecting zone connected to the first electrode plate;
the second tab comprises a second connecting zone connected to the second electrode plate; and
along a length direction of the first electrode plate, a distance between a geometric center of the first connecting zone and the first end portion is denoted as D1; and along a length direction of the second electrode plate, a distance between a geometric center of the second connecting zone and the second end portion is denoted as D2, satisfying: 0.5 ≤ D1/D2 ≤ 2.

8. The electrochemical apparatus according to claim 7, wherein 0.9 ≤ D1/D2 ≤ 1.1.

9. The electrochemical apparatus according to claim 1, wherein at least one of the following conditions is satisfied:
(a) the first tab and the second tab are located on opposite sides of the electrode assembly;
(b) the top wall has a first surface and a second surface opposite each other, the top wall is provided with a through hole penetrating the first surface and the second surface, and the first electrode is disposed in the through hole;
(c) an insulator is provided between the top wall and the first electrode; or
(d) the housing comprises a metal material.

10. An electric device, comprising the electrochemical apparatus according to any one of claims 1 to 9.
